(19) **Europäisches Patentamt**
**European Patent Office**
**Office européen des brevets**

(11) **EP 2 861 854 B1**

(12) **FASCICULE DE BREVET EUROPEEN**

(45) Date de publication et mention de la délivrance du brevet:
**30.11.2016 Bulletin 2016/48**

(21) Numéro de dépôt: **13733379.5**

(22) Date de dépôt: **10.06.2013**

(51) Int Cl.:
**F02D 41/00** *(2006.01)*    **F02D 41/18** *(2006.01)*

(86) Numéro de dépôt international:
**PCT/FR2013/051338**

(87) Numéro de publication internationale:
**WO 2013/190213 (27.12.2013 Gazette 2013/52)**

(54) **PROCEDE DE COMMANDE D'UNE ALIMENTATION EN AIR D'UN MOTEUR A COMBUSTION INTERNE**

EINLASSLUFTSTEUERUNG VERFAHREN ZUR VERBRENNUNGSMOTORS

INTAKE AIR CONTROL METHOD FOR INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.06.2012 FR 1255706**

(43) Date de publication de la demande:
**22.04.2015 Bulletin 2015/17**

(73) Titulaire: **Peugeot Citroën Automobiles SA**
**78140 Vélizy Villacoublay (FR)**

(72) Inventeurs:
• **PACILLY, Christophe**
**F-78120 Rambouillet (FR)**
• **TRELLE, Frederic**
**F-93150 Le Blanc Mesnil (FR)**

• **TRUTET, Arnaud**
**F-78800 Houilles (FR)**

(74) Mandataire: **Renous Chan, Véronique**
**Peugeot Citroen Automobiles SA**
**Propriété Industrielle - LG081**
**18 rue des Fauvelles**
**92250 La Garenne Colombes (FR)**

(56) Documents cités:
**DE-A1- 4 422 184    GB-A- 2 312 284**
**US-A- 5 666 918    US-B1- 6 561 016**

• **HARRISONA M F ET AL: "The acoustics of racing engine intake systems", JOURNAL OF SOUND & VIBRATION, LONDON, GB, vol. 271, no. 3-5, 6 avril 2004 (2004-04-06), pages 959-984, XP008160764, ISSN: 0022-460X, DOI: 10.1016/S0022-460X(03)00773-9**

**Description**

La présente invention revendique la priorité de la demande française 1255706 déposée le 19 juin 2012 dont le contenu (texte, dessins et revendications) est ici incorporé par référence.

L'invention porte sur un procédé de commande d'une alimentation en air d'un moteur à combustion interne équipant un véhicule automobile. Elle a pour objet un tel procédé de commande. Elle a aussi pour objet un dispositif pour la mise en oeuvre d'un tel procédé.

Le document EP 0,706,609 décrit un procédé de commande d'une alimentation en air d'un moteur à combustion interne équipant un véhicule automobile. Le moteur à combustion interne est pourvu d'un moyen d'étranglement pour diminuer un écoulement d'air vers le moteur à combustion interne. Le procédé de commande comprend une étape de détermination d'un besoin en air du moteur à combustion interne en réponse à un signal généré par un conducteur du véhicule automobile. Le procédé comprend également une étape de détermination d'un débit effectif d'alimentation en air vers le moteur à combustion interne et une étape de comparaison du débit effectif avec le besoin en air. Le procédé comprend encore une étape de détermination d'une position-cible du moyen d'étranglement en réponse au signal généré par le conducteur, puis une étape de déplacement du moyen d'étranglement en direction de la position-cible. Le contrôle du déplacement du moyen d'étranglement en direction de la position-cible est réalisé grâce à une boucle d'asservissement de la position d'étranglement, basée sur le signal d'un capteur de position du moyen d'étranglement, afin d'obtenir une position du moyen d'étranglement dans certaines limites de la position-cible. L'ajustement de la position du moyen d'étranglement est obtenu grâce à une boucle d'asservissement d'écoulement d'air en corrigeant ladite position-cible sur la base de la comparaison entre le débit effectif d'alimentation en air et ledit besoin en air déterminé. La position-cible du moyen d'étranglement est compensée en fonction de changements de conditions de fonctionnement et de paramètres du moteur à combustion interne afin d'ajuster la position-cible en fonction du besoin en air déterminé du moteur à combustion interne en fonction du temps. Lesdites conditions et lesdits paramètres comprennent la vitesse du moteur à combustion interne, la charge du moteur à combustion interne, la température d'admission de l'air, la pression du manifold d'admission d'air, la température ambiante et la pression atmosphérique.

Un tel procédé de commande mérite d'être amélioré pour optimiser l'alimentation en air du moteur à combustion interne.

Un but de la présente invention est de proposer un procédé de commande d'une alimentation en air d'un moteur à combustion interne équipant un véhicule automobile, le moteur à combustion interne étant équipé d'une conduite d'alimentation en air qui est équipée d'un organe de régulation d'un débit d'un flux d'air circulant à l'intérieur de la conduite d'alimentation en air, le procédé de commande comprenant une étape de mise en position de l'organe de régulation entre une position d'ouverture totale dans laquelle l'organe de régulation autorise un passage du flux d'air et une position de fermeture dans laquelle l'organe de régulation interdit un tel passage, un tel procédé de commande étant fiable, précis et permettant de minimiser une émission de polluants par le moteur à combustion interne.

Un procédé de commande de la présente invention est un procédé de commande d'une alimentation en air d'un moteur à combustion interne équipant un véhicule automobile. Le moteur à combustion interne est équipé d'une conduite d'alimentation en air qui est pourvue d'un organe de régulation d'un débit d'un flux d'air circulant à l'intérieur de la conduite d'alimentation en air. Le procédé de commande comprend une étape de mise en position de l'organe de régulation qui est mobile entre une position d'ouverture totale dans laquelle l'organe de régulation autorise un passage du flux d'air et une position de fermeture dans laquelle l'organe de régulation interdit un tel passage. Le procédé de commande comprend une étape de calcul d'un coefficient d'admission d'air $A_{ADM}$ pour déterminer une position de l'organe de régulation.

Selon la présente invention, l'étape de calcul prend en compte une variation de fréquence d'accord acoustique $f_0$ d'une colonne d'air logée à l'intérieur de la conduite d'alimentation en air.

Le coefficient d'admission d'air $A_{ADM}$ est avantageusement calculé selon la formule suivante :

$$A_{ADM} = A_{ADM\_ATMO} + k_{ATMO\_TURBO} \times \left( A_{ADM\_TURBO} \times A_{ADM\_ATMO} - A_{ADM\_ATMO} \right)$$

Dans laquelle :

- $A_{ADM\_TMO}(N_2, FA)$ est une cartographie du coefficient d'admission d'air $A_{ADM}$ en fonction d'un angle de fermeture d'une soupape admission d'air $FA$ (4) et du régime moteur $N_2$ corrigé de la variation des fréquences d'accord acoustique ($f_0$),

- $A_{ADM\_TURRO}(N_2, FA)$ est une cartographie du coefficient d'admission d'air $A_{ADM}$ en fonction d'un angle de fermeture de la soupape admission d'air $FA$ (4) et du régime moteur $N_2$ corrigé de la variation des fréquences d'accord acoustique ($f_0$),

-

$$k_{ATMO\_TURBO} = \max\left( 0 \; ; \min\left( 1 \; ; \frac{P_{ADM} - f_A(N_2, FA) \times \dfrac{P_{ATMO}}{Po}}{f_B(N_2) \times \dfrac{P_{ATMO}}{Po}} \right) \right),$$

avec :

- $P_{ADM}$ est la pression d'admission
- $P_{ADM}$ est la pression atmosphérique,

  - $P_{ATMO}$ est la pression atmosphérique,
  - $Po$ est une pression de référence à des conditions nominales de pression et de température
  - $f_A(N_2, FA)$ est une cartographie des fréquences d'accord acoustique en fonction du régime moteur corrigé de la variation des fréquences d'accord acoustique ($f_0$), et de l'angle de fermeture de la soupape admission d'air (5),
  - $f_B(N_2)$ est une cartographie des fréquences d'accord acoustique en fonction du régime moteur corrigé de la variation des fréquences d'accord acoustique $f_0$.

Un dispositif pour la mise oeuvre d'un tel procédé de commande est principalement reconnaissable en ce que le dispositif comprend des moyens de calcul du coefficient d'admission d'air $A_{ADM}$.

L'une unité de commande électronique est avantageusement en relation avec l'organe de régulation.

L'unité de commande électronique est avantageusement en relation avec l'un quelconque au moins d'un premier capteur de température et d'un deuxième capteur de température qui sont placés à l'intérieur de la conduite d'alimentation en air respectivement en amont et en aval de l'organe de régulation selon un sens d'écoulement du flux d'air à l'intérieur de la conduite d'alimentation en air.

D'autres caractéristiques et avantages de la présente invention apparaîtront à la lecture de la description qui va en être faite d'exemples de réalisation, en relation avec les figures de la planche annexée, dans laquelle la figure unique est une vue schématique d'un moteur à combustion interne de la présente invention.

Un véhicule automobile de la présente invention est principalement reconnaissable en ce que le véhicule automobile est équipé d'un tel dispositif.

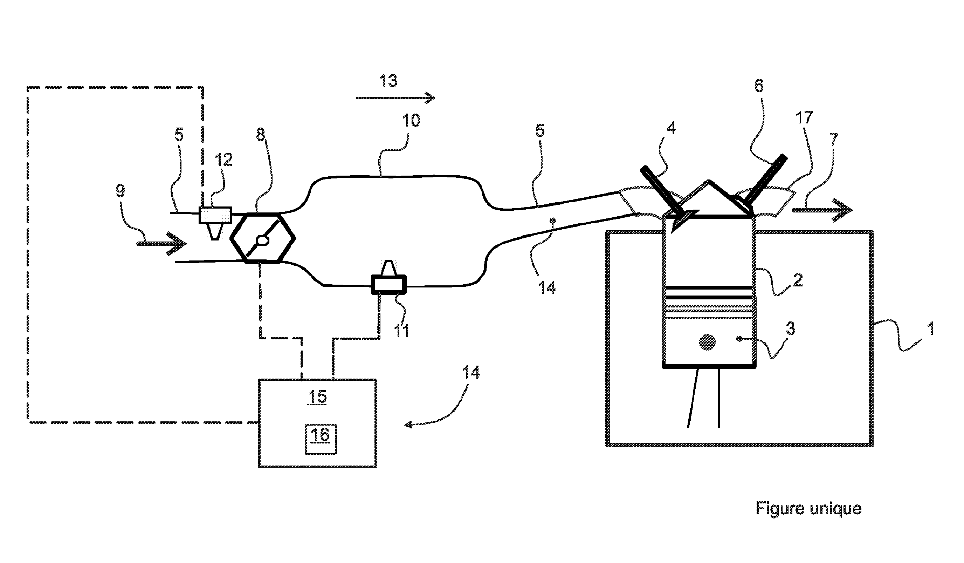

Sur la figure 1, un moteur à combustion interne 1 équipant un véhicule automobile comporte au moins un cylindre 2 à l'intérieur duquel circule un piston 3. Le moteur à combustion interne 1 est préférentiellement un moteur-essence équipé par exemple de trois, quatre ou six cylindres 2. Le moteur à combustion interne 1 est indifféremment un moteur atmosphérique ou un moteur suralimenté. Le moteur à combustion interne 1 est susceptible d'être équipé d'un déphaseur d'arbre à cames à l'admission et/ou à l'échappement. Selon une autre variante, le moteur à combustion interne 1 ne comporte aucun déphaseur.

Le cylindre 2 est pourvu d'une soupape d'admission d'air 4 qui est mobile entre une position d'ouverture dans laquelle la soupape d'admission d'air 4 autorise un passage d'air depuis une conduite d'alimentation en air 5 vers le cylindre 2 et une position de fermeture dans laquelle la soupape d'admission d'air 4 interdit un tel passage. Le cylindre 2 est également pourvu d'une soupape d'évacuation 6 de gaz d'échappement 7 qui est mobile entre une position d'ouverture dans laquelle la soupape d'évacuation 6 autorise une échappée des gaz d'échappement 7 produits à l'intérieur du cylindre 2 vers une ligne d'échappement 17. Les gaz d'échappement 7 constituent des gaz brûlés destinés à être évacués hors du moteur à combustion interne 1 vers l'extérieur du véhicule automobile.

La conduite d'alimentation en air 5 est équipée d'un organe de régulation 8 d'un débit d'un flux d'air 9 circulant à l'intérieur de la conduite d'alimentation en air 5. Le flux d'air 9 constitue un air frais destiné à être admis à l'intérieur du cylindre 2. L'organe de régulation 8 est par exemple constitué d'un volet papillon ou analogue. L'organe de régulation 8 est mobile entre une position d'ouverture totale dans laquelle l'organe de régulation autorise un passage du flux d'air à son travers et une position de fermeture dans laquelle l'organe de régulation interdit un tel passage. La conduite d'alimentation en air 5 comprend un plenum 10 disposé entre l'organe de régulation 8 et la soupape d'admission d'air 4. Le plenum 10 est pourvu d'un premier capteur de température 11 pour mesurer une température $T_p$ de l'air contenu à l'intérieur du plenum 10. Alternativement, la conduite d'alimentation en air 5 est pourvue d'un deuxième capteur de température 12 pour mesurer une température $T_a$ de l'air en amont de l'organe de régulation 8 selon un sens d'écoulement 13 du flux d'air 9 à l'intérieur de la conduite d'alimentation en air 5.

La conduite d'admission d'air 5 délimite une colonne d'air 14 qui est placée en amont de la soupape d'admission d'air 4 selon le sens d'écoulement 13 de l'air à l'intérieur de la conduite d'alimentation en air 5. La colonne d'air 14 vibre à une fréquence d'accord acoustique $f_0$ qui dépend d'une vitesse de déplacement c de la colonne d'air 14 et d'une longueur L de la colonne d'air 14, selon la formule :

$$f_0 = \frac{c}{2 \times L}$$

La vitesse de déplacement c dépend d'une température $T$ de la colonne d'air 14, d'un coefficient adiabatique y (1,4 pour de l'air frais) et d'une constante spécifique (287 J/kg/K pour l'air frais), selon la formule :

$$c = \sqrt{\gamma \times r \times T}$$

La colonne d'air 14 présente un taux de variation $\tau$ de la fréquence d'accord acoustique $f_0$ entre un point de fonctionnement nominal de référence connu du moteur à combustion interne 1 (à une température ambiante nominale $T_{Ref}$ par exemple de l'ordre de 20 °C) et un point de fonctionnement courant avec une température ambiante $T_2$ différente de $T_{Ref}$, est obtenue selon la formule suivante :

$$\tau = \frac{f_2}{f_{ref}} = \frac{\sqrt{\gamma \times r \times T_2}}{\sqrt{\gamma \times r \times T_{Ref}}} = \sqrt{\frac{T_2}{T_{Ref}}}$$

Dans laquelle :

- $f_2$ est la fréquence d'accord acoustique du point de fonctionnement courant,
- $f_{Ref}$ est la fréquence d'accord acoustique du point de fonctionnement de référence,
- $T_2$ est la température ambiante de la colonne d'air 14. La température ambiante $T_2$ est par exemple modélisée à partir de la mesure de la première température $T_p$ dans le plenum 10 ou de la mesure de la deuxième température $T_a$ en amont de l'organe de régulation 8,
- $T_{Ref}$ est la température ambiante nominale, dite de référence, qui est modélisée par une cartographie fonction d'une pression d'admission et d'un régime du moteur à combustion interne 1. Il s'agit de la température de la colonne d'air 14 lors d'une calibration du modèle de remplissage. La calibration du modèle est effectuée à une température ambiante de 20 °C.

Il en résulte une expression de la *fréquence $f_2$* à partir de la fréquence $f_{Ref}$ selon la formule suivante :

$$f_2 = f_{Ref} + f_{Ref} \times \left( \sqrt{\frac{T_2}{T_{Ref}}} - 1 \right)$$

Une variation de la fréquence d'accord acoustique $f_0$ de $f_{Ref}$ à $f_2$ lors d'une variation de la température de la colonne d'air 14 d'une température $T_{Ref}$ à une température $T_2$ est équivalente une modification du régime moteur à une température $T_{Ref}$ fixe. Un tel régime équivalent $N_2$ s'écrit sous la forme suivante :

$$N_2 = N_{Ref} + N_{Ref} \times \left( \sqrt{\frac{T_{Ref}}{T_2}} - 1 \right)$$

Finalement, un coefficient d'admission d'air $A_{ADM}$ est modifié afin de prendre en compte les variations des fréquences d'accord acoustique $f_0$ à partir de la relation suivante :

$$A_{ADM} = A_{ADM\_ATMO} + k_{ATMO\_TURBO} \times \left( A_{ADM\_TURBO} \times A_{ADM\_ATMO} - A_{ADM\_ATMO} \right)$$

Dans laquelle :

- $A_{ADM\_ATMO}(N2, FA)$ est une cartographie du coefficient d'admission d'air $A_{ADM}$ en fonction d'un angle de fermeture de la soupape admission d'air $FA$ 4 et du régime moteur $N_2$ corrigé de la variation des fréquences d'accord acoustique $f_0$,
- AADM TURBO$(N_2, FA)$ est une cartographie du coefficient d'admission d'air $A_{ADM}$ en fonction d'un angle de fermeture de la soupape admission d'air $FA$ 4 et du régime $N_2$ corrigé de la variation des fréquences d'accord acoustique $f_0$,

$$- \quad k_{ATMO\_TURBO} = \max\left( 0 \; ; \; \min\left( 1 \; ; \; \frac{P_{ADM} - f_A(N_2, FA) \times \dfrac{P_{ATMO}}{Po}}{f_B(N_2) \times \dfrac{P_{ATMO}}{Po}} \right) \right),$$

avec :

- $P_{ADM}$ est la pression d'admission
- $P_{ATMO}$ est la pression atmosphérique,
- $Po$ est la pression de référence aux conditions nominales de pression et de température,
- $f_A(N_2, FA)$ est une cartographie des fréquences d'accord acoustique en fonction du régime moteur corrigé de la variation des fréquences d'accord acoustique $f_0$, et de l'angle de fermeture de la soupape admission d'air 5,
- $f_B(N_2)$ est une cartographie des fréquences d'accord acoustique en fonction du régime moteur corrigé de la variation des fréquences d'accord acoustique $f_0$.

Ces dispositions sont telles qu'une influence de la température ambiante $T_2$ de la colonne d'air 14 est prise en compte dans une détermination du coefficient d'admission d'air $A_{ADM}$ en air frais du moteur à combustion interne 1, à partir d'une prise en compte de la fréquence d'accord acoustique $f_0$. Il en découle une optimisation *dans* la détermination du coefficient d'admission d'air $A_{ADM}$ en air frais du moteur à combustion interne 1.

Il en résulte finalement qu'une masse d'air frais Ma présente à l'intérieur du cylindre 2 à la fermeture de la soupape d'admission d'air 5 est calculée à partir du système d'équations suivant :

$$\begin{cases} Ma = \dfrac{(A_{ADM} \times P_{ADM}) \times V_{cyl\_FA}}{(r \times T_{melange})^n} - Mb \\[3mm] T_{mélange} = \dfrac{Ma \times cpa \times Ta + Mb \times cpb \times Tb}{Ma \times cpa + Mb \times cpb} \end{cases}$$

Dans lequel :

- $PAdm$ est la pression d'admission,
- $Vcyl\_FA$ est le volume du cylindre 2 calculé à la fermeture de la soupape d'admission d'air 4
- $r$ est la constante des gaz parfaits,
- $Tmélange$ est la température d'un mélange d'air frais et de gaz brûlé à l'intérieur du cylindre 2,
- $Mb$ est la masse de gaz brûlé,
- $Ta$ est la température des gaz frais,
- $cpa$ est la capacité calorifique massique à pression constante des gaz frais,
- $cpb$ est la capacité calorifique massique à pression constante des gaz brûlé,
- $Tb$ est la température des gaz brûlés.

Un procédé de commande d'une alimentation en air d'un tel moteur à combustion interne 1 comprend une étape de calcul du coefficient d'admission d'air $A_{ADM}$ pour déterminer une position de l'organe de régulation 8, l'étape de calcul prenant en compte une variation de fréquence d'accord acoustique $f_0$ de la colonne d'air 14 logée à l'intérieur de la conduite d'alimentation en air 5 selon la formule énoncée ci-dessus.

Puis, le procédé de commande comprend une étape de mise en position de l'organe de régulation 8 pour adapter le coefficient d'admission d'air $A_{ADM}$ en vue d'une optimisation d'un fonctionnement du moteur à combustion interne 1.

Le moteur à combustion interne 1 est équipé d'un dispositif 14 pour la mise en oeuvre d'un tel procédé de commande. Le dispositif 14 comprend une unité de commande électronique 15 qui est en relation avec au moins le premier capteur de température 11 et/ou le deuxième capteur de température 12 ainsi qu'avec l'organe de régulation 8.

## Revendications

1. Procédé de commande d'une alimentation en air d'un moteur à combustion interne (1) équipant un véhicule automobile, le moteur à combustion interne (1) étant équipé d'une conduite d'alimentation en air (5) qui est pourvue d'un organe de régulation (8) d'un débit d'un flux d'air (9) circulant à l'intérieur de la conduite d'alimentation en air (5), le procédé de commande comprenant une étape de mise en position de l'organe de régulation (8) qui est mobile entre une position d'ouverture totale dans laquelle l'organe de régulation (8) autorise un passage du flux d'air (9) et une position de fermeture dans laquelle l'organe de régulation (8) interdit un tel passage, le procédé de commande comprenant une étape de calcul d'un coefficient d'admission d'air $A_{ADM}$ pour déterminer une position de l'organe de régulation (8), **caractérisé en ce que** l'étape de calcul prend en compte une variation de fréquence d'accord acoustique $f_0$ d'une colonne d'air (14) logée à l'intérieur de la conduite d'alimentation en air (5).

2. Procédé de commande selon la revendication précédente, **caractérisé en ce que** le coefficient d'admission d'air $A_{ADM}$ est calculé selon la formule suivante :

$$A_{ADM} = A_{ADM\_ATMO} + k_{ATMO\_TURBO} \times \left( A_{ADM\_TURBO} \times A_{ADM\_ATMO} - A_{ADM\_ATMO} \right)$$

Dans laquelle :

- $A_{ADM\_ATMO}$ ($N_2$, $FA$) est une cartographie du coefficient d'admission d'air $A_{ADM}$ en fonction d'un angle de fermeture d'une soupape admission d'air $FA$ (4) et du régime moteur $N_2$ corrigé de la variation des fréquences d'accord acoustique ($f_0$),
- $A_{ADM\ TURBO}$($N_2$, $FA$) est une cartographie du coefficient d'admission d'air $A_{ADM}$ en fonction d'un angle de fermeture de la soupape admission d'air $FA$ (4) et du régime moteur $N_2$ corrigé de la variation des fréquences d'accord acoustique ($f_0$),

$$- \quad k_{ATMO\_TURBO} = \max\left( 0\ ;\ \min\left( 1\ ;\ \frac{P_{ADM} - f_A(N_2, FA) \times \dfrac{P_{ATMO}}{Po}}{f_B(N_2) \times \dfrac{P_{ATMO}}{Po}} \right) \right),$$

avec :

  - $P_{ADM}$ est la pression d'admission
  - $P_{ATMO}$ est la pression atmosphérique,
  - $Po$ est une pression de référence à des conditions nominales de pression et de température
  - $f_A(N_2, FA)$ est une cartographie des fréquences d'accord acoustique en fonction du régime moteur corrigé de la variation des fréquences d'accord acoustique ($f_0$), et de l'angle de fermeture de la soupape admission d'air (5),
  - $f_B(N_2)$ est une cartographie des fréquences d'accord acoustique en fonction du régime moteur corrigé de la variation des fréquences d'accord acoustique $f_0$.

3. Dispositif (14) pour la mise oeuvre d'un procédé de commande selon l'une quelconque des revendications 1 et 2, **caractérisé en ce que** le dispositif (14) comprend une unité de commande électronique (15) qui comprend des moyens de calcul (16) du coefficient d'admission d'air $A_{ADM}$.

4. Dispositif (14) selon la revendication 3, **caractérisé en ce que** le dispositif (14) est en relation avec l'organe de régulation (8).

5. Dispositif (14) selon l'une quelconque des revendications 3 et 4, **caractérisé en ce que** l'unité de commande électronique (15) est en relation avec l'un quelconque au moins d'un premier capteur de température (11) et d'un deuxième capteur de température (12) qui sont placés à l'intérieur de la conduite d'alimentation en air (5) respectivement en amont et en aval de l'organe de régulation (8) selon un sens d'écoulement du flux d'air (9) à l'intérieur de la conduite d'alimentation en air (5).

6. Véhicule automobile équipé d'un dispositif (14) selon l'une quelconque des revendications 3 à 5.

**Patentansprüche**

1. Verfahren zur Steuerung einer Luftzufuhr eines Verbrennungsmotors (1), der ein Kraftfahrzeug ausstattet, wobei der Verbrennungsmotor (1) mit einer Luftzufuhrleitung (5) ausgestattet ist, die mit einem Organ zur Regulierung (8) eines Durchsatzes eines Luftstroms (9) versehen ist, der im Inneren der Luftzufuhrleitung (5) zirkuliert, wobei das Verfahren zur Steuerung einen Schritt des Positionierens des Organs zur Regulierung (8) umfasst, das zwischen einer Position der vollständigen Öffnung, in der das Organ zur Regulierung (8) einen Durchgang des Luftstroms (9) ermöglicht, und einer Position des Verschlusses beweglich ist, in der das Organ zur Regulierung (8) einen derartigen Durchgang blockiert, wobei das Verfahren zur Steuerung einen Schritt des Berechnens eines Lufteinlasskoeffizenten $A_{ADM}$ umfasst, um eine Position des Organs zur Regulierung (8) zu bestimmen, **dadurch gekennzeichnet, dass** der Schritt des Berechnens eine Variation der akustischen Abstimmfrequenz $f_0$ einer Luftsäule (14) berücksichtigt, die im Inneren der Luftzufuhrleitung (5) aufgenommen ist.

2. Verfahren zur Steuerung nach dem vorhergehenden Anspruch, **dadurch gekennzeichnet, dass** der Lufteinlasskoeffizient $A_{ADM}$ gemäß der folgenden Formel berechnet wird:

$$A_{ADM} = A_{ADM\_ATMO} + k_{ATMO\_TURBO} \times (A_{ADM\_TURBO} \times A_{ADM\_ATMO} \times A_{ADM\_ATMO})$$

wobei:

- $A_{ADM-ATMO}$ *(N_2, FA)* eine Darstellung des Lufteinlasskoeffizienten $A_{ADM}$ in Funktion eines Schließwinkels eines Lufteinlassventils FA (4) und der Motordrehzahl $N_2$, korrigiert um die Variation der akustischen Abstimmfrequenzen ($f_0$), ist,
- $A_{ADM\_TURBO}$ *(N_2, FA)* eine Darstellung des Lufteinlasskoeffizienten $A_{ADM}$ in Funktion eines Schließwinkels des Lufteinlassventils FA (4) und der Motordrehzahl $N_2$, korrigiert um die Variation der akustischen Abstimmfrequenzen ($f_0$), ist,

$$- \quad k_{ATMO\_TURBO} = \max\left( 0 \; ; \; \min\left( 1 \; ; \; \frac{P_{ADM} - f_A(N_2, FA) \times \frac{P_{ATMO}}{Po}}{f_B(N_2) \times \frac{P_{ATMO}}{Po}} \right) \right)$$

wobei

- $P_{ADM}$ der Einlassdruck ist,
- $P_{ATMO}$ der atmosphärische Druck ist,
- $P_o$ ein Referenzdruck unter nominalen Druck- und Temperaturbedingungen ist,
- $f_A(N_2, FA)$ eine Abbildung der akustischen Abstimmfrequenzen in Funktion der Motordrehzahl, korrigiert um die Variation der akustischen Abstimmfrequenzen ($f_0$), und des Schließwinkels des Lufteinlassventils (5) ist,
- $f_B(N_2)$ eine Abbildung der akustischen Abstimmfrequenzen in Funktion der Motordrehzahl, korrigiert um die Variation der akustischen Abstimmfrequenzen $f_0$, ist.

3. Vorrichtung (14) zur Durchführung eines Verfahrens zur Steuerung nach einem beliebigen der Ansprüche 1 und 2, **dadurch gekennzeichnet, dass** die Vorrichtung (14) eine Einheit zur elektronischen Steuerung (15) umfasst, die Mittel zur Berechnung (16) des Lufteinlasskoeffizienten $A_{ADM}$ umfasst.

**4.** Vorrichtung (14) nach Anspruch 3, **dadurch gekennzeichnet, dass** die Vorrichtung (14) mit dem Organ zur Regulierung (8) in Bezug steht.

**5.** Vorrichtung (14) nach einem der Ansprüche 3 und 4, **dadurch gekennzeichnet, dass** die elektronische Steuerung (15) mit einem beliebigen von mindestens einem ersten Temperatursensor (11) und einem zweiten Temperatursensor (12) steht, die im Inneren der Luftzufuhrleitung (5), vorgelagert bzw. nachgelagert vom Organ zur Regulierung (8), gemäß einer Flussrichtung des Luftstroms (9) im Inneren der Luftzufuhrleitung (5) angeordnet sind.

**6.** Kraftfahrzeug, ausgestattet mit einer Vorrichtung (14) nach einem beliebigen der Ansprüche 3 bis 5.

**Claims**

**1.** Method for controlling a supply of air to an internal combustion engine (1) equipping a motor vehicle, the internal combustion engine (1) being equipped with an air-supply conduit (5) that is provided with a member (8) for regulating the rate of an airflow (9) flowing inside the air-supply conduit (5), the control method comprising a step of positioning the regulation member (8), which is able to move between a completely open position in which the regulation member (8) allows passage of the airflow (9) and a closed position in which the regulation member (8) prevents such passage, the control method comprising a step of calculating an air-admission coefficient $A_{ADM}$ for determining a position of the regulation member (8), **characterised in that** the calculation step takes into account a variation in acoustic tuning frequency $f_0$ of a column of air (14) housed inside the air-supply conduit (5).

**2.** Control method according to the preceding claim, **characterised in that** the air-inlet coefficient $A_{ADM}$ is calculated in accordance with the following formula:

$$A_{ADM} = A_{ADM\_ATMO} + k_{ATMO\_TURBO} \times (A_{ADM\_TURBO} \times A_{ADM\_ATMO} \times A_{ADM\_ATMO})$$

in which:

- $A_{ADM\_ATMO}(N_2, FA)$ is a mapping of the air-admission coefficient $A_{ADM}$ as a function of a closure angle of an air-inlet valve $FA$ (4) and of the engine speed $N_2$ corrected by the variation in the acoustic tuning frequencies ($f_0$),
- $A_{ADM\_TURBO}(N_2, FA)$ is a mapping of the air-admission coefficient $A_{ADM}$ as a function of the closure angle of the air-inlet valve $FA$ (4) and of the engine speed $N_2$ corrected by the variation in the acoustic tuning frequencies ($f_0$),

$$- \quad k_{ATMO\_TURBO} = \max\left( 0 \;;\; \min\left( 1 \;;\; \frac{P_{ADM} - f_A(N_2, FA) \times \dfrac{P_{ATMO}}{Po}}{f_B(N_2) \times \dfrac{P_{ATMO}}{Po}} \right) \right)$$

with:

- $P_{ADM}$ is the admission pressure
- $P_{ATMO}$ is the atmospheric pressure
- $P_o$ is a reference pressure under nominal pressure and temperature conditions
- $f_A(N_2, FA)$ is a mapping of the acoustic tuning frequencies as a function of the engine speed corrected by the variation in the acoustic tuning frequencies ($f_0$) and the closure angle of the air-inlet valve (5),
- $f_B(N_2)$ is a mapping of the acoustic tuning frequencies as a function of the engine speed corrected by the variation in the acoustic tuning frequencies $f_0$.

**3.** Device (14) for implementing a control method according to either of claims 1 and 2, **characterised in that** the device (14) comprises an electronic control unit (15) that comprises means (16) for calculating the air-inlet coefficient $A_{ADM}$.

**4.** Device (14) according to claim 3, **characterised in that** the device (14) is in relationship with the regulation member (8).

5. Device (14) according to either of claims 3 and 4, **characterised in that** the electronic control unit (15) is in relationship with either of at least a first temperature sensor (11) and a second temperature sensor (12) that are placed inside the air-supply conduit (5) respectively upstream and downstream of the regulation member (8) in a direction of flow of the airflow (9) inside the air-supply conduit (5).

6. Motor vehicle equipped with a device (14) according to any of claims 3 to 5.

EP 2 861 854 B1

Figure unique

10

**EP 2 861 854 B1**

**Documents brevets cités dans la description**

- FR 1255706

- EP 0706609 A